# EUROPEAN PATENT APPLICATION

(11) **EP 2 017 577 A1**
(43) Date of publication of application: **21.01.2009**
(21) Application number: 07742954.6
(22) Date of filing: 08.05.2007
(51) Int. Cl.: G01C 21/26, B60R 16/02, G08G 1/0969, G09B 29/00, G09B 29/10

(54) **NAVIGATION DEVICE**

(30) Priority: 09.05.2006 JP 2006129933; 09.05.2006 JP 2006129934; 09.05.2006 JP 2006129935
(71) Applicant: Sanyo Electric Co., Ltd., Osaka 570-8677 (JP); SANYO Consumer Electronics Co., Ltd., Tottori 6808634 (JP)
(72) Inventor: YAMANE, Kazuhiro c/o SANYO Consumer Elec. Co., Ltd, Tottori 6808634 (JP); NAKAJIMA, Kazuhiro c/o SANYO Consumer Elec. Co.,, Tottori 6808634 (JP); TSUTSUMI,Shunsuke c/o SANYO Consumer Elec. Co.,, Tottori 6808634 (JP); ABE, Yuichi c/o SANYO Consumer Elec. Co., Ltd, Tottori 6808634 (JP)
(74) Representative: HOFFMANN EITLE
(86) International application number: PCT/JP2007/059519
(87) International publication number: WO 2007/129710

(57) **Abstract**

A navigation device having a route search section for searching for a route from a start point to destination that are specified, a sensor section for detecting traveling conditions of the vehicle, a GPS reception section for positioning a current position, a map storage section having map information stored in it, output means (voice output section), an acceleration determination section, and a rapid-acceleration/deceleration-information recording section. The acceleration determination section determines that acceleration calculated based on an output of the sensor section or the GPS reception section is above a predetermined threshold, determines operation of rapid acceleration/deceleration based on map information obtained from the map storage section on the basis of the current position positioned by the GPS reception section, records information on the rapid acceleration/deceleration on the rapid- acceleration/deceleration-information recording section, and, if the acceleration/deceleration operation is inappropriate, informs the fact to the output means.

## Description

### TECHNICAL FIELD

The present invention relates to an onboard navigation device having an energy-saving drive support function for supporting energy-saving driving with consideration given to fuel economy, and particularly relates to a navigation device that is designed to recognize rapid acceleration or deceleration on the basis of information acquired from various sensors and positioning means, and determine whether the rapid acceleration or deceleration is an appropriate operation on the basis of the position of the vehicle in a guidance route during travel.

### BACKGROUND WART

There are conventionally known navigation devices and systems for searching for a route from a desired departure location to a destination and guiding a user with the aid of map data and road data. Such navigation devices and systems include car navigation devices mounted in automobiles so as to provide the driver with route guidance, navigation systems with a communication feature for sending a route search request to a route search server with the aid of a mobile phone as a navigation terminal and receiving the results and route guidance, as well as other devices and systems.

The car navigation device described above makes use of GPS (Global Positioning System), receives via a GPS antenna a GPS signal transmitted from a plurality of GPS satellites in orbit above the earth, and analyzes the satellite position, time information, and the like included in the GPS signal to specify a location. The number of the GPS satellites is required to be at least four or more. The independent positioning accuracy of GPS is generally greater than 10 m, and the positioning accuracy is improved to 5 m or less when DGPS (Differential GPS) is used.

The navigation device is provided with a road network database for searching for a route. The road network database stores node data in which the node points, curves, and other data of the roads (routes) in the map data are used as nodes, and also stores link data in which the routes connecting the nodes are used as links, and link cost data having cost information (distance and required time) of all the links. The navigation device refers to the database, sequentially searches the links that start from the node of a departure point and end at the node of a destination, and provides guidance by searching for the shortest route by following the nodes and links that minimize the cost information of the links and by using the result as a guidance route. A method referred to as the label determination method or the Dijkstra method is used as the route search technique that uses such a database.

The effective use of the global environment and energy resources has become a major issue in recent years, and systems are being considered for reducing adverse effects on the global environment due to exhaust gas that accompanies automobile operation, and preventing inappropriate consumption of energy resources. Such a function can be referred to as an energy-saving drive support function, and an example of a system that has been proposed is one in which data showing the operational state is collected from the vehicle, and notifications are provided statistically or in real time when the operational state is one in which the consumption of fuel or other energy is inappropriate.

An example of a system having such an energy-saving drive support function is disclosed as a vehicle operation management system in Patent Document 1 (Japanese Laid-open Patent Application No. 2003-316864) described below. The vehicle operation management system disclosed in Patent Document 1 is composed of an information center wherein data that shows the operational state is collected from vehicles. Each vehicle is provided with a control circuit, and the vehicle speed, engine speed, and other vehicle information are acquired by the control circuit from various sensors and transmitted to the information center. The information center issues a command to analyze the current operational state of the vehicle from the vehicle information and to carry out energy-saving driving when energy-saving driving is not being carried out. The control circuit displays commands from the information center on a display device.

For example, the following items are set as predetermined conditions for determining whether energy-saving driving is being carried out. In other words, examples include situations in which the following cases apply: (1) the case in which the engine speed is high in comparison with the vehicle speed, that is to say, the case in which the engine speed is high despite the fact that the vehicle is traveling at low speed, or the engine speed frequently increases despite the fact that the vehicle speed variation is low; (2) the case in which the engine speed is high or an idling state has continued for a long period of time despite the fact that the travel distance has not increased; (3) the case in which a shift position appropriate for the speed has not been selected, the case in which rapid acceleration/deceleration occurs frequently, the case in which the vehicle speed is high, and the case in which the shift position is changed frequently in a short period of time; and (4) the case in which the throttle aperture greatly varies frequently in a short period of time, as well as other cases. A function that supports safe driving can be included in a similar fashion in such cases.
[Patent Reference 1]: Japanese Laid-open Patent Application No. 2003-316864 (FIG. 1, Paragraphs [0015],

### DISCLOSURE OF THE INTENTION

### [Problems the Invention Is Intended To Solve]

However, in the operation management system disclosed in Patent Document 1, the vehicle must have an onboard apparatus for collecting data related to the operational state and sending the information to an information center, and a function for displaying on the onboard apparatus information from the information center. There is a problem in that costs are incurred in order to provide such an apparatus. There is also a problem in that capital investment is required in order to establish an information center for operation management and drive support, and such investment is not appropriate for a system that can be provided as a support device for a large number of average drivers.

An example of a case in which fuel is inappropriately consumed in an automobile is one in which a rapid acceleration/deceleration operation has been performed. However, in an operation management and drive support system disclosed in Patent Document 1, frequently repeated rapid acceleration and deceleration is detected and reported to the onboard apparatus, but the system does not analyze the nature of the route that the vehicle having the onboard apparatus is traveling. Therefore, there is a problem in that the suitability of the acceleration/deceleration operation must be uniformly determined based on a fixed reference.

Automobiles travel on roads of various shapes, and a rapid deceleration operation is an appropriate operation in that the brakes must unavoidably be operated to decelerate the vehicle for safety when traveling around a curve or the like. Automobiles also travel on expressways, ordinary roads, and other roads having different attributes. Expressways ordinarily have a high-speed travel and curves at ramps and interchanges, and there are cases in which rapid deceleration must occur to branch onto a desired road. A deceleration operation in this case is also an appropriate operation. Conversely, there are also cases in which a vehicle accelerates from a low speed to a high speed when entering an expressway from a curve. A rapid acceleration in this case is an appropriate operation.

In the operation management and drive support system disclosed in Patent Document 1, since the state of the road on which the vehicle is actually traveling cannot be known, there is a problem in that it cannot be determined in detail whether the operation is an appropriate driving operation or an inappropriate driving operation, and effective energy-saving drive support cannot be achieved when rapid acceleration and deceleration occurs as described above.

As a result of thoroughgoing research to solve the problems described above, the present inventors perfected the present invention in view of the fact that navigation devices for searching for a route from a desired departure location to a destination and providing guidance along an optimal route having the least distance and required time to the destination have become widespread as existing onboard devices that provide driving support. The present inventors conceived that the problems described above can be solved by providing energy-saving drive support after determining whether rapid acceleration/deceleration is an appropriate operation or an inappropriate operation on the basis of information obtained by the navigation device from various sensors and positioning means, position information during travel, and road and other map information.

In other words, an object of the present invention is to solve the problems described above and to provide a navigation device that can provide an effective energy-saving drive support function.

### [Means for Solving the Abovementioned Problems]

In order to solve the problems described above, the invention of the navigation device according to a first aspect of the present invention is a navigation device comprising a route search section for searching for a route from a specified departure location to a destination, a sensor section for detecting a travel state of the vehicle, a GPS reception section for positioning a current position, a map storage section in which map data is stored, and output means, the navigation device characterized in comprising an acceleration level determination section, and a rapid acceleration/deceleration information-recording section, wherein the acceleration level determination section determines that an acceleration level calculated on the basis of output of the sensor or the GPS reception section has exceeded a predetermined threshold, determines a rapid acceleration/deceleration operation on the basis of map information obtained from the map storage section on the basis of the current position and the information of the current position positioned by the GPS reception section, and records in the rapid acceleration/deceleration information-recording section the rapid deceleration information indicating the existence of a rapid acceleration/deceleration state.

The navigation device according to a second aspect of the present invention is the navigation device according to the first aspect, characterized in that the navigation device has a threshold value table in which threshold values are set for each of a plurality of intervals related to the vehicle movement speed; and the acceleration level determination section acquires the corresponding threshold value from the threshold value table in accordance with the interval related to the vehicle movement speed, calculates the acceleration level on the basis of the output of the sensor section or the GPS reception section, makes a comparison with the acquired threshold value, determines whether a rapid acceleration/deceleration has been performed, and records rapid acceleration/deceleration information in the rapid acceleration/deceleration information-recording section.

The navigation device according to a third aspect of the present invention is the navigation device according to the first or second aspect, characterized in that the acceleration level determination section determines that acceleration level calculated based on the output of the sensor section or the GPS reception section has exceeded a predetermined threshold value, determines the suitability of the rapid acceleration/deceleration on the basis of map information obtained from the map storage section on the basis of the current position and the information of the current position measured by the GPS reception section, and records in the rapid acceleration/deceleration information-recording section the rapid acceleration/deceleration information indicating the existence of an inappropriate rapid acceleration/deceleration state.

The navigation device according to a fourth aspect of the present invention is the navigation device according to the third aspect, characterized in that the rapid acceleration/deceleration information includes a time, number of occurrences, and location in which an inappropriate rapid acceleration/deceleration operation has occurred.

The navigation device according to a fifth aspect of the present invention is the navigation device according to the third aspect, characterized in that the acceleration level determination section provides a notification to the output means in the case that the inappropriate rapid acceleration/deceleration has been determined.

The navigation device according to a sixth aspect of the present invention is the navigation device according to the third aspect, characterized in that the acceleration level determination section determines a rapid acceleration/deceleration operation to be inappropriate when the current position is on a straight road on the basis of map information obtained from the map storage section on the basis of the current position and the information of current position positioned by the GPS reception section in the case that the acceleration level calculated based on the output of the sensor section or the GPS reception section has been determined to have exceeded a predetermined threshold value.

The navigation device according to a seventh aspect of the present invention is the navigation device according to the third aspect, characterized in that the acceleration level determination section determines a rapid acceleration/deceleration operation to be inappropriate when the current position is on a road having a predetermined curvature or greater on the basis of map information obtained from the map storage section on the basis of the current position and the information of the current position positioned by the GPS reception section in the case that the acceleration level calculated based on the output of the sensor section or the GPS reception section has been determined to have exceeded a predetermined threshold value.

The navigation device according to an eighth aspect of the present invention is the navigation device according to the second aspect, characterized in that intervals of the movement speed in the threshold value table are divided based on road attributes that include speed limit information, and a threshold value is set for each road attribute.

The navigation device according to a ninth aspect of the present invention is the navigation device according to the second aspect, characterized in that intervals of the movement speed in the threshold value table are divided in accordance with the movement speed acquired from the vehicle, and a threshold value is set for each interval of movement speed.

The navigation device according to a tenth aspect of the present invention is the navigation device according to the fifth aspect, characterized in that the navigation device has a notification output control section, and the notification output control section suppresses notification output of rapid acceleration/deceleration information to the output means when the vehicle is detected to be moving under a predetermined condition on the basis of information of the current position positioned by the GPS reception section and map information obtained from the map storage section on the basis of the current position.

The navigation device according to an eleventh aspect of the present invention is the navigation device according to the tenth aspect, characterized in that the predetermined condition is a state in which the vehicle is traveling through an intersection.

The navigation device according to a twelfth aspect of the present invention is the navigation device according to the tenth aspect, characterized in that the predetermined condition is a state in which the vehicle is traveling around a curve.

The navigation device according to a thirteenth aspect of the present invention is the navigation device according to any of the tenth to twelfth aspects, characterized in that the notification output control section notifies and outputs the rapid acceleration/deceleration information to the output means after movement under the predetermined condition has ended.

### [Effect of the Invention]

In the invention of the first aspect, there is provided a navigation device comprising a route search section for searching for a route from a specified departure location to a destination, a sensor for detecting a travel state of the vehicle, a GPS reception section for positioning a current position, a map storage section in which map data is stored, and output means, the navigation device characterized in comprising an acceleration level determination section, and a rapid acceleration/deceleration information-recording section, wherein the acceleration level determination section determines that an acceleration level calculated on the basis of output of a sensor or a GPS reception section has exceeded a predetermined threshold, determines a rapid acceleration/deceleration operation on the basis of map information obtained from the map storage section on the basis of the current position and the information of the current position positioned by the GPS reception section, and records in the rapid acceleration/deceleration information-recording section the rapid deceleration information indicating the existence of a rapid acceleration/deceleration state.

In accordance with such a configuration, the acceleration level is compared with a predetermined threshold value that has been suitably set, whereby it can be determined that a rapid acceleration or deceleration has been performed without the effect of air resistance or the like, and the state of the rapid acceleration/deceleration can be recorded. Accordingly, a navigation device having an effective energy-saving drive support function can be provided.

In the navigation device according to the second aspect, there is provided the navigation device according to the first aspect, wherein the navigation device has a threshold value table in which threshold values are set for each of a plurality of intervals related to the vehicle movement speed; and the acceleration level determination section acquires the corresponding threshold value from the threshold value table in accordance with the interval related to the vehicle movement speed, calculates the acceleration level on the basis of the output of the sensor section or the GPS reception section, makes a comparison with the acquired threshold value, determines whether a rapid acceleration/deceleration has been performed, and records rapid acceleration/deceleration information in the rapid acceleration/deceleration information-recording section.

In accordance with such a configuration, the acceleration level and the threshold value suitably set in accordance with the vehicle movement speed are compared, whereby it can be accurately determined that a rapid acceleration or deceleration has been performed without the effect of air resistance or the like, and the state of the rapid acceleration/deceleration can be recorded. Accordingly, a navigation device having an effective energy-saving drive support function can be provided.

In the navigation device according to the third aspect, there is provided the navigation device according to the first or second aspect, wherein the acceleration level determination section determines that an acceleration level calculated based on the output of the sensor section or the GPS reception section has exceeded a predetermined threshold value, determines the suitability of the rapid acceleration/deceleration on the basis of map information obtained from the map storage section on the basis of the current position and the information of the current position positioned by the GPS reception section, and records in the rapid acceleration/deceleration information-recording section the rapid acceleration/deceleration information indicating the existence of an inappropriate rapid acceleration/deceleration state.

In accordance with such a configuration, the navigation device determines the travel state of the vehicle whether an appropriate rapid acceleration/deceleration has been performed or an inappropriate rapid acceleration/deceleration has been performed without providing an onboard device for carrying out energy-saving drive support. Information related to the inappropriate rapid acceleration/deceleration operation can be recorded, and energy-saving drive support function can be provided in fine detail.

In the navigation device according to the fourth aspect, there is provided the navigation device according to the third aspect, wherein the rapid acceleration/deceleration information includes a time, number of occurrences, and location in which an inappropriate rapid acceleration/deceleration operation has occurred. Therefore, the time, number of occurrences, and location in which an inappropriate rapid acceleration/deceleration operation has occurred can be known, and accurate energy-saving drive support can be carried out.

In the navigation device according to the fifth aspect, there is provided the navigation device according to the third aspect, wherein the acceleration level determination section provides a notification to the output means when a rapid acceleration/deceleration has been determined to be inappropriate. In accordance with such a configuration, the user is notified in the case that the inappropriate rapid acceleration/deceleration has been determined, and the user can be urged to drive in an energy-efficient manner.

In the navigation device according to the sixth aspect, there is provided the navigation device according to the third aspect, wherein the acceleration level determination section determines a rapid acceleration/deceleration operation to be inappropriate when the current position is on a straight road on the basis of map information obtained from the map storage section on the basis of the current position and the information of current position positioned by the GPS reception section in the case that the acceleration level calculated based on the output of the sensor section or the GPS reception section has been determined to have exceeded a predetermined threshold value. In accordance with such a configuration, the suitability of a rapid acceleration/deceleration operation can be determined, and energy-saving drive support can be carried out in fine detail.

In the navigation device according to the seventh aspect, there is provided the navigation device according to the third aspect, wherein the acceleration level determination section determines a rapid acceleration/deceleration operation to be inappropriate when the current position is on a road having a predetermined curvature or greater on the basis of map information obtained from the map storage section on the basis of the current position and the information of the current position positioned by the GPS reception section in the case that the acceleration level calculated based on the output of the sensor section or the GPS reception section has been determined to have exceeded a predetermined threshold value. In accordance with such a configuration, the suitability of a rapid acceleration/deceleration operation can be determined, and energy-saving drive support can be carried out in fine detail.

In the navigation device according to the eighth aspect, there is provided the navigation device according to the second aspect, wherein intervals of the movement speed in the threshold value table are divided based on road attributes that include speed limit information, and a threshold value is set for each road attribute. In accordance with such a configuration, the attributes of the road being traveled are determined, and the acceleration level and the threshold value suitably set in accordance with the movement speed are compared, whereby it can be finely determined that a rapid acceleration or deceleration has been performed without the effect of air resistance or the like, and the state of the rapid acceleration/deceleration can be accurately determined.

In the navigation device according to the ninth aspect, there is provided the navigation device according to the second aspect, wherein intervals of the movement speed in the threshold value table are divided in accordance with the movement speed acquired from the vehicle, and a threshold value is set for each interval of movement speed. In accordance with such a configuration, the movement speed of the vehicle during travel is detected and the acceleration level and the threshold value suitably set in accordance with the movement speed are compared, whereby it can be finely determined that a rapid acceleration or deceleration has been performed without the effect of air resistance or the like.

In the navigation device according to the tenth aspect, there is provided the navigation device according to the fifth aspect, wherein the navigation device has a notification output control section, and the notification output control section suppresses notification output of rapid acceleration/deceleration information to the output means when the vehicle is detected to be moving under a predetermined condition on the basis of information of the current position positioned by the GPS reception section and map information obtained from the map storage section on the basis of the current position.

In accordance with such a configuration, notification when the vehicle is rapidly accelerating or decelerating is suppressed in accordance with the travel state of the vehicle. Therefore, notification is suppressed in a travel state inappropriate for the notification, and a situation can be avoided in which attention is paid to ascertaining the notification content leading to dangerous situation.

In the navigation device according to the eleventh aspect, there is provided the navigation device according to the tenth aspect, wherein the predetermined condition is a state in which the vehicle is traveling through an intersection. Therefore, notification can be suppressed when the vehicle is traveling through an intersection in the case that the vehicle is rapidly accelerating or decelerating, and a situation can therefore be avoided in which attention is paid to ascertaining the notification content leading to dangerous situation.

In the navigation device according to the twelfth aspect, there is provided the navigation device according to the tenth aspect, wherein the predetermined condition is a state in which the vehicle is traveling around a curve. Therefore, notification is suppressed when the vehicle is traveling around a curve in the case that a rapid acceleration/deceleration has been performed. Therefore, a situation can be avoided in which attention is paid to ascertaining the notification content leading to dangerous situation.

In the navigation device according to the thirteenth aspect, there is provided the navigation device according to any of the tenth to twelfth aspects, wherein the notification output control section notifies and outputs the rapid acceleration/deceleration information to the output means after movement under the predetermined condition has ended. Therefore, notification is suppressed when notification is provided in the case that an inappropriate travel state exists, and a situation can be avoided in which attention is paid to ascertaining the notification content leading to dangerous situation. Also, after an inappropriate travel state has ended, accurate driving support can be carried out because notification of rapid acceleration/deceleration information is provided.

### BRIER DESCRIPTION OF THE DRAWINGS

FIG. 1 is a block diagram showing the configuration of the navigation device according to the first embodiment of the present invention;
FIG. 2 is a flowchart showing the operation sequence of the navigation device according to the first embodiment of the present invention;
FIG. 3 is a block diagram showing the configuration of the navigation device according to the second embodiment of the present invention;
FIG. 4 is a diagram showing an example of the threshold table provided to the navigation device according to the second embodiment of the present invention;
FIG. 5 is a flowchart showing the operation procedure in the navigation device according to the second embodiment of the present invention;
FIG. 6 is a diagram showing an example of the threshold table provided to the navigation device according to the third embodiment of the present invention;
FIG. 7 is a flowchart showing the operation procedure in the navigation device according to the third embodiment of the present invention;
FIG. 8 is a block diagram showing the configuration of the navigation device according to the fourth embodiment of the present invention; and
FIG. 9 is a flowchart showing the operation procedure of the navigation device according to the fourth embodiment of the present invention.

### [Key to Symbols]

- 10: navigation device
- 11: control section
- 111: acceleration level determination section
- 112: route search section
- 113: threshold table
- 114: notification output control section
- 12: GYPS reception section
- 13: map storage section
- 14: display section
- 15: sensor section
- 16: input section
- 17: route storage section
- 18: rapid acceleration/deceleration information-recording section
- 19: voice output section

### BEST MODE FOR CARRYING OUT THE INVENTION

Specific examples of the present invention will be described in detail hereinafter with reference to embodiments and drawings. However, the embodiments described below are examples of a navigation device indented to describe in detail the technological concept of the present invention, and are not intended to limit the present invention to the navigation device [described in the examples]. The present invention can be equally applied to a navigation device of other embodiments within the scope of the claims.

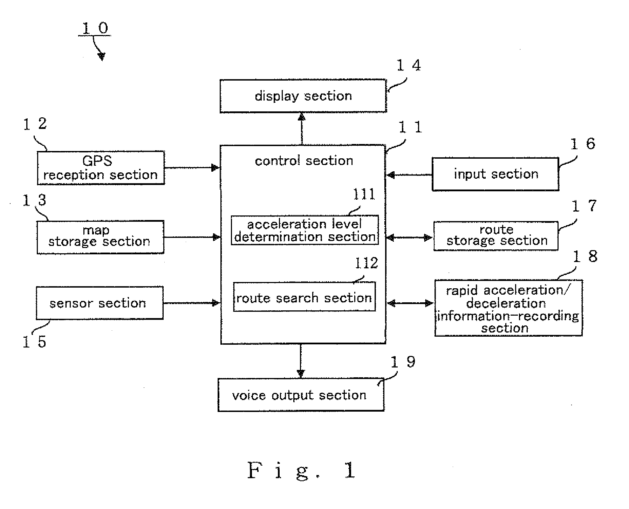

FIG. 1 is a block diagram showing the configuration of the navigation device 10 according to the first embodiment of the present invention. The navigation device 10 is composed of a control section 11, a GPS reception section 12, a map storage section 13, a display section 14, a sensor section 15, an input section 16, a route storage section 17, a rapid acceleration/deceleration information-recording section 18, an voice output section 19, and other components.

The GPS reception section 12 is positioning means for receiving a signal transmitted from a plurality of GPS satellites and calculating the current position using latitude and longitude, and is a means for positioning at predetermined time intervals the current position of an automobile in which the navigation device 10 is mounted. Maps and network data (nodes, links, link costs) for conducting a route search are stored in the map storage section 13.

The display section 14 is display means composed of a liquid crystal display section or the like, and displays a map and a guidance route. The map and guidance route displayed on the display section 14 is displayed with the current position at the center as positioned by the GPS reception section 12, and the current position is scrolled and displayed as progress is made on the route. When the current position is a location prior (a predetermined distance) to an intersection or the like on the guidance route, the direction (straight, right turn, left turn) in which to proceed from the intersection or other the guidance is displayed on the display section 14, or outputted via the voice output section 19 composed of a speaker or the like.

The input section 16 is input means provided with a numeric keys, character input keys, function keys, a touch panel, and the like. The input section 16 is provided with a selection key and cursor for selecting items on a menu screen displayed on the display section 14.

The control section 11 is a control circuit composed of a microprocessor, and is provided with an undepicted ROM and RAM. A program for controlling the operation of each component is stored in the ROM. Examples of programs that may be stored include a program used by the control section 11 for searching for a route, and a program for detecting the acceleration level of a vehicle having an onboard navigation device 10, making a comparison with a predetermined threshold value, determining whether a drive operation that produced a rapid acceleration/deceleration has been performed, and determining whether the rapid acceleration/deceleration is an appropriate operation or an inappropriate operation on the basis of map information that includes the road being traveled by the vehicle, and information acquired from the guidance route and GPS reception section 12. Therefore, the control section 11 is composed of an acceleration level determination section 111 and a route search section 112.

The route search section 112 refers to route search network data stored in the map storage section 13 in accordance with the departure location, the destination, and other route search conditions inputted from the input section 16, and searches for the most optimal route as a guidance route. The information of the guidance route searched by the route search section 112 and the information of the guidance for each intersection are stored in the route storage section 17. The guidance route is displayed on the display section 14, and voice guidance is provided via the voice output section 19.

The map displayed on the display section 14 is acquired (read) from map information or the map storage section 13 in a predetermined range with the current position at the center, and is displayed with the current position in the center of the display screen. When the route search section searches for a route to obtain a guidance route, the guidance route is superimposed and displayed using a different color than that used as the display color on the map displayed on the display section 14.

Generally, the daily traveled routes to home, work, and the like are not searched using the navigation function each time the route is traveled, only the display map and current position are displayed on the display section 14, and the navigation device is not used to receive guidance. The navigation function is mainly used when a visit is made to resort or sightseeing area, or when a visit is made to a location via an unfamiliar route that has not yet been driven or the like.

The sensor section 15 is composed of a vehicle speed sensor, a steering sensor, an engine speed sensor, a timer, and the like, and is used to detect the travel state of the vehicle. The output of each sensor is continuously measured to thereby acquire the travel path. The acceleration level determination section 111 calculates the acceleration level on the basis of the vehicle speed sensor output of the sensor section 15. The acceleration level can be calculated based on the speed obtained from positioning time intervals and the current position obtained at predetermined intervals from the GPS reception section 12. In other words, when the GPS reception section 12 measures a position each second, for example, and the speed between A and B and between B and C is set to 5 m/sec and 10 m/sec, respectively, then the acceleration level is a = (V - Vo)/t = 10 - 5/1 = 5 n/sec². A determination is made as to whether the calculated acceleration level is equal to or greater than a threshold value (whether rapid acceleration/deceleration has occurred).

The acceleration level determination section 111 determines whether the calculated acceleration level is a predetermined threshold value or greater in accordance with the road attributes, whereby it can be determined whether a rapid acceleration or deceleration operation has occurred and whether the rapid acceleration/deceleration is an appropriate operation or an inappropriate operation on the basis of the information (latitude and longitude) of the current position positioned by the GPS reception section 12 and the map information obtained from the map storage section 13 on the basis of current position.

In this case, for example, it is determined that an appropriate operation has occurred when the current position is on a curved road, and it is determined that an inappropriate operation has occurred when the current position is a straight road. The determination of whether the road is curved or straight can be made by determining that the road is curved when the curvature is a predetermined curvature or greater on the basis of road attributes information, and that the road is straight when the curvature is a predetermined curvature or less. When the acceleration level determination section 111 has determined an operation to be inappropriate, the time, number of occurrences, and the location where the operation occurred are stored as rapid acceleration/deceleration information. The user is notified via the display section 14 and the voice output section 19.

The threshold value of the acceleration level derived from the road attributes is set to, e.g., "4 m/sec²" during acceleration and "6 m/sec²" during deceleration on an ordinary road, and "3 m/sec ²" during acceleration and "5 m/sec²" during deceleration on an expressway. A road curvature having, e.g., a "300-m radius" or less is set to be a curve on an expressway, and a greater radius is set to be straight road. A road curvature having, e.g., a "150-m radius" or less is set to be a curve on an ordinary road, and a greater radius is set to be straight road.

In other words, in the first embodiment, when an acceleration level exceeding a threshold value is detected based on the state of the road being traveled, a rapid acceleration/deceleration operation is determined to have occurred and the rapid acceleration/deceleration information is stored away. An inappropriate rapid acceleration or rapid deceleration is determined to have occurred based on the state of the road being traveled when the change in acceleration level exceeding a predetermined threshold value has occurred in the case that a straight road is being traveled. An inappropriate rapid acceleration or rapid deceleration is determined to have occurred when a change in acceleration level exceeding a predetermined threshold value has occurred in the case that a curved road is being traveled. It can be determined in fine detail whether an inappropriate driving operation (acceleration/deceleration operation) has occurred from the information of the rapid acceleration/deceleration. When an inappropriate driving operation has been detected, the driver is notified of the information, and energy-saving operation support can be carried out.

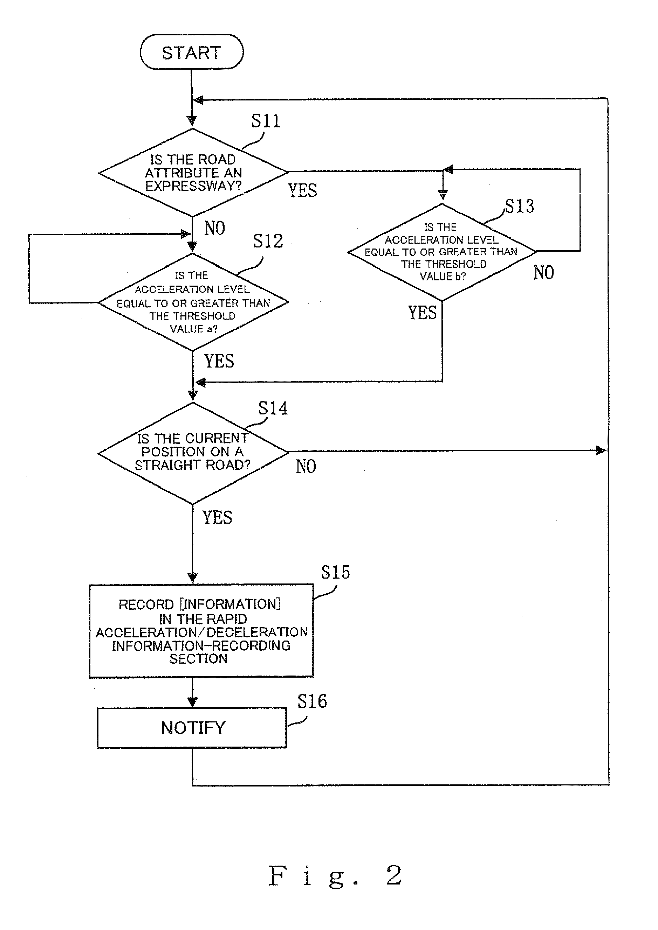

The operation procedure of the navigation device according to the present embodiment will be described next with reference to the flowchart of FIG. 2. First, the acceleration level determination section 111 identifies the road on which the vehicle is traveling from the map information, which includes the road matching the current position positioned by the GPS reception section 12 and the information of the guidance route searched by the route search section 112, and determines whether the road attribute is an ordinary road or an expressway (step S11) When the road being traveled is an ordinary road, the process proceeds to the processing of step S12, and when the road is an expressway, the process proceeds to the processing of step S13.

In the processing of step S12, the acceleration level is calculated and it is determined whether the acceleration is equal to or greater than a predetermined threshold value a that is set for ordinary roads. When the acceleration level has not exceeded the predetermined threshold value a, the determination processing of step S12 is repeated, and when the predetermined threshold value has been exceeded, the process proceeds to the processing of step S14. It is determined whether the road being traveled is a straight road on the basis of the information of the current position positioned by the GPS reception section 12 and on the basis of the map information obtained from the map storage section 13 on the basis of the current position or the information of the guidance route searched by the route search section 112.

When the road is straight in the processing of step S14, an inappropriate rapid acceleration/deceleration is determined, and the rapid acceleration/deceleration information is recorded in the rapid acceleration/deceleration information-recording section 18 (step S15). The user is notified via the display section 14, the voice output section 19, or another output means in the processing of step S16.

On the other hand, when an expressway is being traveled, the acceleration level is calculated and it is determined whether the acceleration is equal to or greater than a predetermined threshold value b that is set for expressways. When the acceleration level has not exceeded the predetermined threshold value b, the determination processing of step S13 is repeated, and when the predetermined threshold value has been exceeded, the process proceeds to the processing of step S14. It is determined whether the road being traveled is a straight road on the basis of the information of the current position positioned by the GPS reception section 12 and on the basis of the map information obtained from the map storage section 13 on the basis of the current position or the information of the guidance route searched by the route search section 112.

When the road is straight in the processing of step S14, an inappropriate rapid acceleration/deceleration is determined, and the rapid acceleration/deceleration information is recorded in the rapid acceleration/deceleration information-recording section 18 (step S15). The user is notified via the display section 14, the voice output section 19, or another output means in the processing of step S16.

In the embodiment described above, an example was described in which the acceleration level determination section 111 calculates the acceleration level from the output of the vehicle speed sensor, but when an acceleration level sensor is provided to the sensor section 15, the acceleration level may be acquired from the detection data of the acceleration level sensor.

In accordance with the navigation device according to the present embodiment as described above, the acceleration level of a vehicle is compared with a predetermined threshold value to detect rapid acceleration and rapid deceleration. The state of the road being traveled by a vehicle can be used to determine appropriate rapid acceleration/deceleration and inappropriate rapid acceleration/deceleration in fine detail, and effective energy-saving drive support can be performed.

In the navigation device 10 according the first embodiment, the acceleration level, and a predetermined threshold value that corresponds to road attributes are compared, and an inappropriate driving operation is determined, but inappropriate acceleration or deceleration can also be determined in greater detail by setting the threshold value in a finely detailed manner.

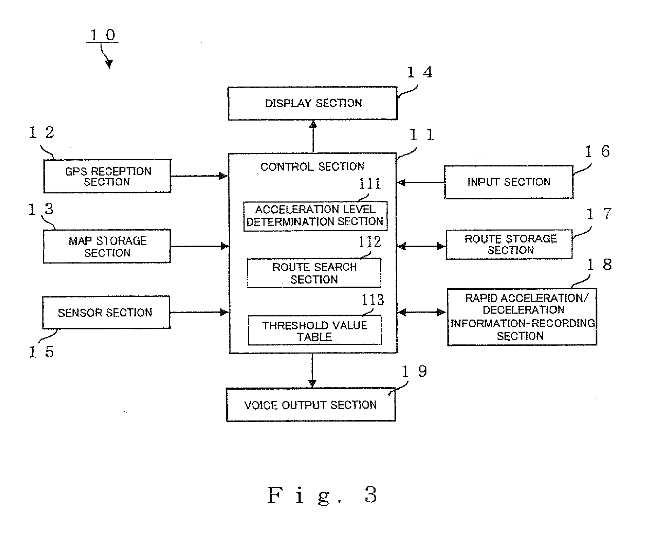

FIG. 3 is a block diagram showing the configuration of the navigation device 10 according to the second embodiment of the present invention. The configuration of the navigation device 10 is essentially the same as the configuration of the navigation device 10 according to the first embodiment shown in FIG. 1, but is different in that a threshold value table 113 in which threshold values are set in accordance with road attributes is provided. In FIG. 3, the same reference numerals are used for the constituent elements that correspond to FIG. 1. A description of these constituent elements is omitted in order to avoid redundant description. Seition device

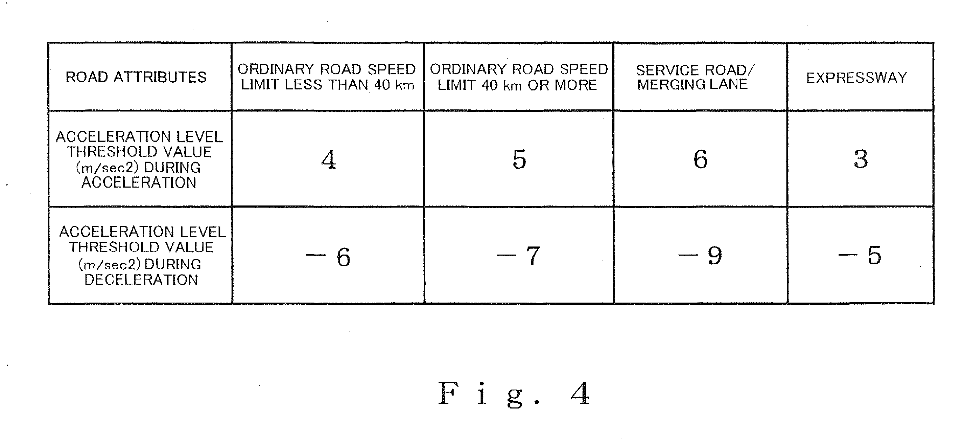

The control section 11 is provided with a threshold value table 113 for making comparisons with the acceleration level, as shown in FIG. 3. Threshold values that correspond to road attributes are set in the threshold value table 113, as shown in FIG. 4. In other words, an acceleration level threshold value (m/sec²) during acceleration and an acceleration level threshold value (m/sec²) during deceleration are set in the threshold value table 113 for each road attribute. The road attributes are assigned acceleration level threshold values in accordance with an ordinary road having a speed limit of less than 40 km/h, an ordinary road having a speed limit of 40 km/h or higher, a service road/merging lane, and an expressway, respectively.

The threshold values for comparing the acceleration level (the value of acceleration is a positive) during acceleration and the acceleration level during deceleration (the value of the acceleration level is a negative value) are set as different values in the threshold value table 113. The reason for this is that the accelerator must be depressed considerably in order to generate a desired acceleration level during acceleration, in contrast to generating a desired acceleration level using a small amount of braking operation during deceleration. Accordingly, the threshold values during acceleration and deceleration are set to levels that correspond to each case.

The sensor section 15 is composed of a vehicle speed sensor, a steering sensor, an engine speed sensor, a timer, and the like, as described above in the first embodiment, and detects the travel state of the vehicle. The travel trajectory can be acquired by continuously measuring the output of each sensor.

The acceleration level determination section 111 calculates the acceleration level on the basis of the output of the vehicle speed sensor of the sensor section 15. The acceleration level may also be calculated based on the speed obtained from the current position positioned by the GPS reception section 12 at predetermined intervals and the positioning time interval. The acceleration level is a = (V - Vo) /t = 10 - 5/1 = 5 m/sec² when the acceleration level is calculated from the positioning data of the GPS reception section 12, the position is positioned every second, for example, and the speed between A and B and between B and C is to 5 m/sec and 10 m/sec, respectively. It is determined whether the calculated acceleration level is a threshold value or higher (rapid acceleration/deceleration has been performed). When the acceleration level is less than the predetermined threshold value, it is determined that a single rapid acceleration/deceleration operation has been performed, and the number of occurrences is counted.

In order to make this determination in the second embodiment, the corresponding threshold value is read from the threshold value set in the threshold value table 113 in accordance with the road attribute, and a comparison is made. The attributes of the road on which the vehicle is traveling can be determined from the road data of the map information read from the map storage section 13 on the basis of the current position positioned by the GPS reception section 12, or from the data of the guidance road searched by the route search section 112.

For example, when the acceleration level determination section 111 has detected the acceleration level during acceleration in the case that the vehicle is traveling on an expressway, a comparison is made with "3" (see FIG. 4) as the threshold value, which is the corresponding threshold value. The existence of a rapid acceleration operation is determined by whether the acceleration level is at the threshold value or higher. The same process is performed for the case in which the acceleration level during deceleration has been detected. A comparison is made between the acceleration level and the threshold value suitably set in this manner in accordance with the movement speed of the vehicle, whereby a rapid acceleration operation or deceleration operation can be determined in fine detail without being affected by air resistance or the like.

In this manner, when the acceleration level determination section 111 detects a rapid acceleration operation and determines that an inappropriate operation has occurred, the location when the operation occurred and the time and number of occurrences are stored as rapid acceleration/deceleration information. The user is notified via the display section 14 or the voice output section 19.

The acceleration level determination section 111 determines whether an inappropriate rapid acceleration/deceleration operation has been performed by comparing the threshold value that corresponds to the movement speed, which is based on the road attributes and on the basis of the acceleration level calculated based on the output of the vehicle speed sensor or the GPS reception section 12 in the manner described above. When this determination is made, the acceleration level determination section 111 may determine whether a rapid acceleration/deceleration operation is an appropriate operation or an inappropriate operation additionally using the travel state of the vehicle on the basis of the information (latitude and longitude) of the current position positioned by the GPS reception section 12 and the map information obtained from the map storage section 13 based on current position, or on the basis of information of the guidance route searched by the route search section 112.

In this case, for example, the operation is determined to be appropriate when the current position is on a curved road, and the operation is determined to be inappropriate when the current position is on a straight road. The determination of a curved road or a straight road is made by determining that the road is curved when the curvature is a predetermined curvature or less on the basis of the road attribute information, and by determining that the road is straight when the curvature is predetermined curvature or greater. When the acceleration level determination section 111 has determined that an inappropriate operation has occurred, the location when the operation occurred and the time and number of occurrences are stored as rapid acceleration/deceleration information. The user is notified via the display section 14 or the voice output section 19.

An example of the curvature of a road for determining a curve or a straight road is one in which, e.g., a "300-m radius" or less is set to be a curve on an expressway, and a greater radius is set to be straight road; and one having, e.g., a "150-m radius" or less is set to be a curve on an ordinary road, and a greater radius is set to be straight road.

In the present embodiment, the acceleration level and the threshold value set in accordance with the movement speed based on the road attributes are thus compared, whereby an inappropriate rapid acceleration/deceleration operation can be determined following a change in the acceleration level caused by the effect of air resistance or the like during high speed travel.

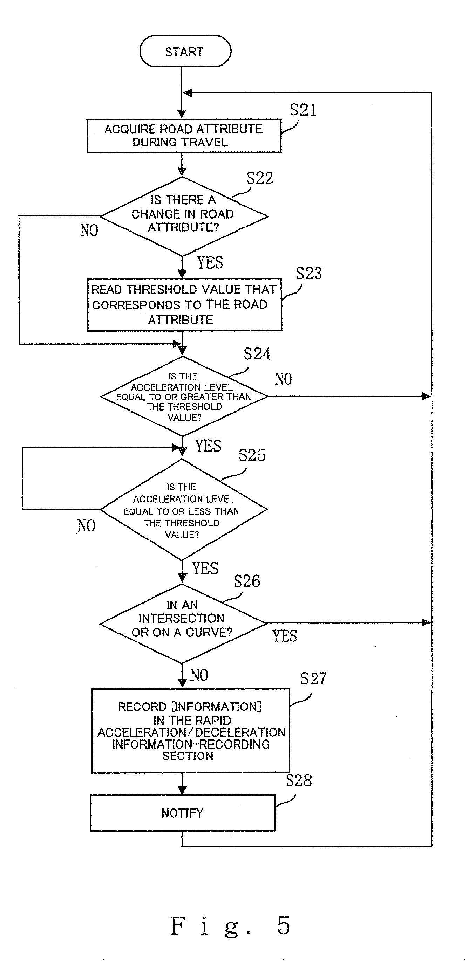

Next, the operation procedure of the navigation device of the second embodiment is described with reference to the flowchart of FIG. 5. First, the acceleration level determination section 111 determines the road being traveled from the road data of the map information read from the map storage section 13 on the basis of the information of the guidance route searched by the route search section 112 the current position positioned by the GPS reception section 12, and acquires the road attributes (step S21). It is subsequently determined in step S22 whether there has been a change in the road attributes.

When road attributes have changed, the threshold value set with respect to the corresponding road attribute from the threshold value table 113 is read in the processing of step S23. If there has been no change in the road attributes, use is made of the threshold value already read from the threshold value table 113 in accordance with the road attribute used until that point. In the processing of step S24, the acceleration level determination section 111 calculates the acceleration level on the basis of the sensor output of the GPS reception section 12 or the sensor section 15, and makes a comparison between the acceleration level and the threshold value to determine whether the acceleration level is equal to or greater than a threshold value. In this determination, the process returns to the processing of step S21 when the acceleration level is not equal to or greater than the threshold value.

It is determined in the processing of step S25 whether the acceleration level is equal to or less than the threshold value. The processing of step S25 is repeated when the acceleration level is equal to or less than the threshold value. When the acceleration level is equal to or less than the threshold value, it is determined that a single rapid acceleration/deceleration operation has occurred and the process proceeds to step S26.

In the processing of step S26, the acceleration level determination section 111 determines whether the vehicle is traveling through an intersection or a curve from the current position and the road data of the map information read from the map storage section 13 on the basis of the information of the current position positioned by the GPS reception section 12 or the information of the guidance route searched by the route search section 112. When the vehicle is traveling through an intersection or a curve, it is determined that a rapid acceleration/deceleration operation is appropriate and the process proceeds to the processing of step S21.

When the vehicle is not traveling through an intersection or a curve, the rapid acceleration/deceleration operation is determined to be inappropriate. The rapid acceleration/deceleration information is stored in the rapid acceleration/deceleration information-recording section 18 in the processing of step S27, and the user is notified via the display section 14, the voice output section 19, or other output means in the processing of step S28.

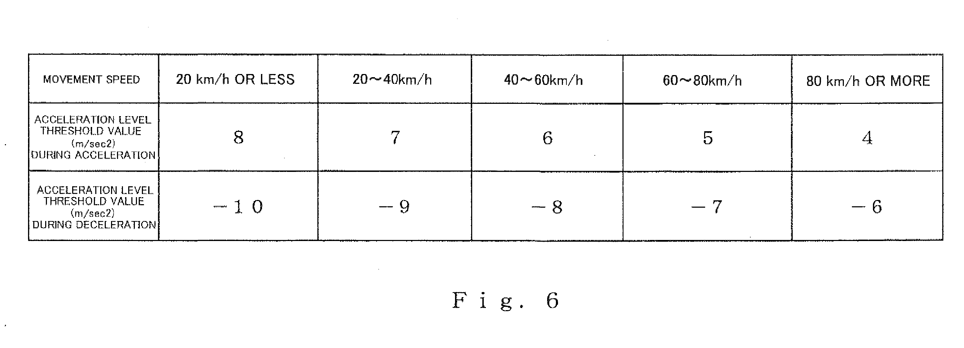

In the navigation device 10 of the second embodiment described above, a configuration was described having a threshold value table 113 in which threshold values are set in accordance with road attributes, but a configuration is also possible in which the movement speed of the vehicle calculated from the output of the GPS reception section 12 or the actual movement speed of the vehicle detected by the vehicle speed sensor of the sensor section 15 is divided into movement speed intervals having a number of steps, and a threshold value table such as that shown in FIG. 6 is provided in which a threshold value is set for each movement speed interval. Excluding the threshold value table 113, other configurations of the navigation device 10 according the third embodiment are the same as those of the navigation device 10 according to the second embodiment shown in FIG. 3. A description of the constituent elements is omitted in order to avoid redundant description.

The threshold value table shown in FIG. 6 has the movement speeds of the vehicle divided into five movement speed intervals, i.e., 20 km/h or less, 20 to 40 km/h, 40 to 60 km/h, 60 to 80 km/h, 80 km/h or more. The threshold value of the acceleration level during acceleration (m/sec²) and the threshold value (m/sec²) of the acceleration level during deceleration are set for each road attribute for each movement speed interval. For example, the threshold value of the acceleration level during acceleration is 4 (m/sec²) at a movement speed of 80 km/h or higher.

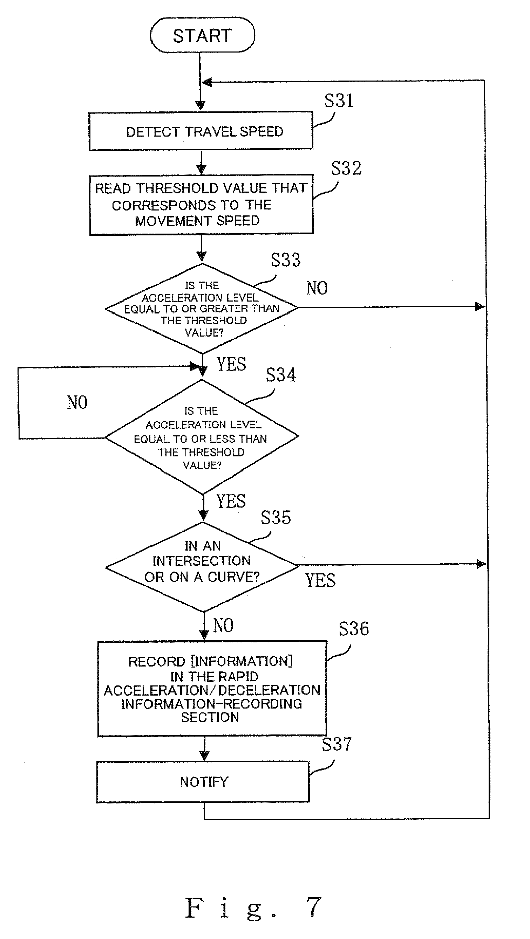

Next, the operation procedure of the navigation device 10 according to the third embodiment will be described with reference to the flowchart of FIG. 7. First, the acceleration level determination section 111 detects the movement speed of the vehicle from the GPS reception section 12 or the vehicle speed output of the sensor section 15 in the processing of step S31. Next, the threshold value (threshold value of the acceleration level), which is set to the corresponding movement speed interval, is read with reference to the threshold value table 113 (see FIG. 6) on the basis of the movement speed in the processing of step S32.

In the processing of step S33, the acceleration level determination section 111 calculates the acceleration level on the basis of the output of the GPS reception section 12 or the sensor output of the sensor section 15, and the acceleration level is compared with the threshold value read in the processing of step S32 so as to determine whether the acceleration level is equal to or greater than the threshold value. In this determination, the process returns to the processing of step S31 when the acceleration level is equal to or greater than the threshold value.

It is determined in the processing of step S34 whether the acceleration level is equal to or less than the threshold value. The processing of step S34 is repeated when the acceleration level is equal to or less than the threshold value. When the acceleration level is equal to or less than the threshold value, it is determined that a single rapid acceleration/deceleration operation has occurred and the process proceeds to step S35.

In the processing of step S35, the acceleration level determination section 111 determines whether the vehicle is traveling through an intersection or a curve from the current position and the road data of the map information read from the map storage section 13 on the basis of the information of the current position positioned by the GPS reception section 12 or the information of the guidance route searched by the route search section 112. When the vehicle is traveling through an intersection or a curve, it is determined that a rapid acceleration/deceleration operation is appropriate and the process returns to the processing of step S31.

When the vehicle is not traveling through an intersection or a curve, the rapid acceleration/deceleration operation is determined to be inappropriate. The rapid acceleration/deceleration information is stored in the rapid acceleration/deceleration information-recording section 18 in the processing of step S36, and the user is notified via the display section 14, the voice output section 19, or other output means in the processing of step S37.

As described above, in accordance with the second and third embodiments, in the navigation device provided with a driving support function for detecting that a rapid acceleration/deceleration operation has been performed and providing notification, appropriate threshold values are set in relation to the road attributes and movement speeds to make it possible to detect that a rapid acceleration/deceleration operation has been performed. Therefore, a navigation device having an effective energy-saving drive support function can be provided.

In the navigation device 10 of the first to third embodiments described above, configurations were described in which the driver is notified by voice output or the like in a case in which a rapid acceleration/deceleration operation has been performed, and particularly when an inappropriate rapid acceleration/deceleration operation has been performed. However, it is preferred that consideration be given to the timing with which the driver is notified. For example, it is preferred that the driver be able to focus on driving operations when traveling through an intersection or a curve, and it is preferred that the timing at which the driver is notified be set to occur when travel through the intersection or the curve has ended.

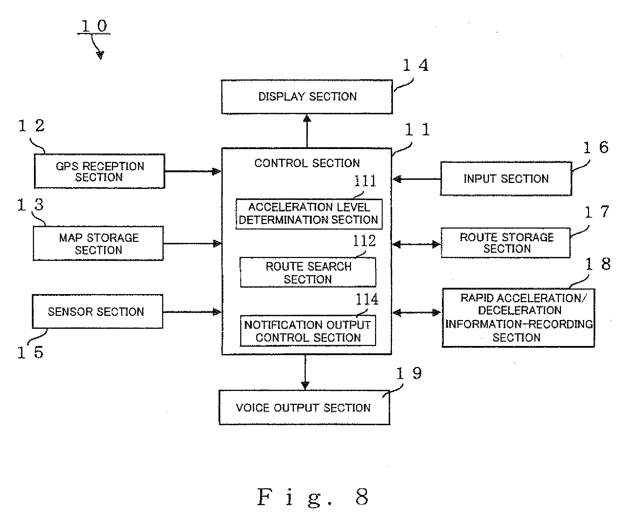

The navigation device 10 according to the fourth embodiment described below is one in which the notification timing is controlled. FIG. 8 is a block diagram showing the configuration of the navigation device 10 according to the fourth embodiment of the present invention. The configuration of the navigation device 10 is essentially the same as the configuration of the navigation device 10 according to the first embodiment shown in FIG. 1, but is different in that a notification output control section 114 is provided. In FIG. 8, the same reference numerals are used for the constituent elements that correspond to FIG. 1. A description of these constituent elements is omitted in order avoid redundant description. Seition device

The control section 11 is a control circuit composed of a microprocessor as described in FIG. 1, and is provided with an undepicted ROM and RAM. A program for controlling the operation of each component is stored in the ROM. Examples of programs that may be stored include a program used by the control section 11 for searching for a route, and a program for detecting the acceleration level of a vehicle having an onboard navigation device 10, making a comparison with a predetermined threshold value, determining whether a drive operation that produced a rapid acceleration/deceleration has been performed, and determining whether the rapid acceleration/deceleration is an appropriate operation or an inappropriate operation on the basis of map information that includes the road being traveled by the vehicle, and information acquired from the guidance route and GPS reception section 12.

Also stored in the ROM is a voice output control program for controlling voice notification to carry out or suppress notification in accordance with predetermined conditions in the voice output section 19 on the basis of information acquired from the GPS reception section 12 and the guidance route being traveled by the vehicle. Therefore, the control section 11 is composed of an acceleration level determination section 111, a route search section 112, and a notification output control section 114.

In the present embodiment, when notification is made to the voice output section 19 of the rapid acceleration/deceleration information, the voice notification is suppressed so as to prohibit or delay the voice notification via the voice output section 19 in accordance with predetermined conditions on the basis of the information (latitude and longitude) of the current position positioned by the GPS reception section 12 and the map information obtained from the map storage section 13 on the basis of current position. The predetermined conditions are, first, the case in which the vehicle is passing through an intersection and, second, the case in which the vehicle is traveling around a curve (making a rapid turn). The notification is carried out after the predetermined conditions have ended. The content of the notification is a message indicating the fact that an inappropriate rapid acceleration/deceleration was performed based on information recorded in the rapid acceleration/deceleration information-recording section 18.

Danger brought about by attention being paid to listening to a voice notification can be eliminated because voice notification during travel through an intersection or a curve is eliminated by controlling voice notification in this manner.

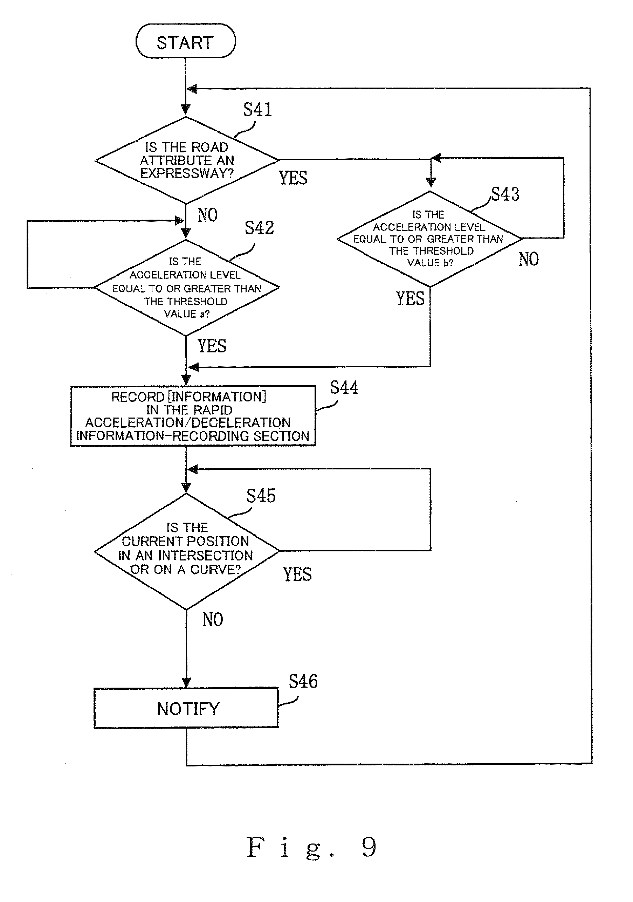

Next, the operation procedure of the navigation device according to the fourth embodiment will be described with reference to the flowchart of FIG. 9. First, the acceleration level determination section 111 identifies the road being traveled from the information of the current position positioned by the GPS reception section 12 and the map information read from the map storage section 13 on the basis of current position, and determines whether the road attribute is an ordinary road or an expressway (step S41). When the road being traveled is an ordinary road, the process proceeds to the processing of step S42, and when the road is an expressway, the process proceeds to the processing of step S43. The road attributes may also be obtained from the data of the road links of the guidance routes when the guidance route has already been searched from the route search section 112.

In the processing of step S42, the acceleration level is determined and it is determined whether the acceleration level is equal to or greater than a predetermined threshold value a that is set for an ordinary road. The processing of step S42 is repeated when the acceleration level has not exceeded a predetermined threshold value a. When the acceleration level has exceeded the predetermined threshold value, the process proceeds to the processing of step S44 and the rapid acceleration/deceleration is determined to be inappropriate. When the acceleration level is less than the predetermined threshold value, it is determined that a single rapid acceleration/deceleration operation has been performed, the number of occurrences is counted, and the rapid acceleration/deceleration information is recorded in the rapid acceleration/deceleration information-recording section 18. The rapid acceleration/deceleration information recorded in the rapid acceleration/deceleration information-recording section 18 includes the location where the operation occurred, and the time and number of occurrences.

Next, in the processing of step S45, it is determined whether the vehicle is traveling through an intersection or a curve from the information of the guidance route searched by the route search section 112 and the information of the current position positioned by the GPS reception section 12. When the vehicle is not traveling through an intersection or a curve, the process proceeds to the processing of S46, and the notification output control section 114 provides a notification to the voice output section 19 that an inappropriate rapid acceleration/deceleration operation has been carried out.

In the processing of step S45, the processing of step S45 is repeated when the vehicle is traveling through an intersection or a curve, the process proceeds to the processing of step S46 when the vehicle has finished passing through the intersection or the curve, and the notification output control section 114 provides a notification to the voice output section 19 that an inappropriate rapid acceleration/deceleration operation has been performed. In other words, voice output in the voice output section 19 is suppressed when the vehicle is traveling through an intersection or a curve, and notification is provided from the voice output section 19 when passage through the intersection or curve has ended.

In the determination processing of step S41, the process will proceed to step S43 when the road being traveled is an expressway. In the processing of step S43, the acceleration level is determined and a determination is made as to whether the acceleration level set for an expressway is equal to or greater than a predetermined threshold value b. The determination processing of step S43 is repeated when the acceleration level has not exceeded the predetermined threshold value b. When the acceleration level has exceeded the predetermined threshold value, the process proceeds to the processing of step S44 and the rapid acceleration/deceleration is determined to be inappropriate. When the acceleration level is less than the threshold value, it is determined that a single rapid acceleration/deceleration operation has been performed, the number of occurrences is counted, and the rapid acceleration/deceleration information is recorded in the rapid acceleration/deceleration information-recording section 18.

In the fourth embodiment described above, an example was described in which the acceleration level determination section 111 calculates the acceleration level from the output of the vehicle speed sensor, but in the case that an acceleration level sensor is provided to the sensor section 15, the acceleration level may be acquired from detection data of the acceleration level sensor.

As described in detail above, in accordance with the navigation device 10 according to the present invention, a predetermined threshold value and the acceleration level are compared, a rapid acceleration/deceleration operation is detected, the information is stored in the rapid acceleration/deceleration information storage section, and the driver is notified when an inappropriate rapid acceleration/deceleration operation has been detected, whereby energy-saving drive support can be carried out.

## Claims

1. A navigation device comprising a route search section for searching for a route from a specified departure location to a destination, a sensor section for detecting a travel state of the vehicle, a GPS reception section for positioning a current position, a map storage section in which map data is stored, and output means, said navigation device **characterized in** comprising:
an acceleration level determination section; and
a rapid acceleration/deceleration information-recording section, wherein
said acceleration level determination section determines that an acceleration level calculated on the basis of output of said sensor section or GPS reception section has exceeded a predetermined threshold, determines a rapid acceleration/deceleration operation on the basis of map information obtained from the map storage section on the basis of the current position and the information of the current position positioned by said GPS reception section, and records in said rapid acceleration/deceleration information-recording section the rapid deceleration information indicating the existence of a rapid acceleration/deceleration state.

2. The navigation device according to claim 1, **characterized in that** said navigation device has a threshold value table in which threshold values are set for each of a plurality of intervals related to the vehicle movement speed; and said acceleration level determination section acquires the corresponding threshold value from said threshold value table in accordance with the interval related to the vehicle movement speed, calculates the acceleration level on the basis of the output of said sensor section or GPS reception section, makes a comparison with said acquired threshold value, determines whether a rapid acceleration/deceleration has been performed, and records rapid acceleration/deceleration information in said rapid acceleration/deceleration information-recording section.

3. The navigation device according to claim 1 or 2, **characterized in that** said acceleration level determination section determines that an acceleration level calculated based on the output of said sensor section or GPS reception section has exceeded a predetermined threshold value, determines the suitability of said rapid acceleration/deceleration on the basis of map information obtained from the map storage section on the basis of the current position and the information of the current position positioned by said GPS reception section, and records in said rapid acceleration/deceleration information-recording section the rapid acceleration/deceleration information indicating the existence of an inappropriate rapid acceleration/deceleration state.

4. The navigation device according to claim 3, **characterized in that** said rapid acceleration/deceleration information includes a time, number of occurrences, and location in which an inappropriate rapid acceleration/deceleration operation has occurred.

5. The navigation device according to claim 3, **characterized in that** said acceleration level determination section provides a notification to said output means in the case that said inappropriate rapid acceleration/deceleration has been determined.

6. The navigation device according to claim 3, **characterized in that** said acceleration level determination section determines a rapid acceleration/deceleration operation to be inappropriate when the current position is on a straight road on the basis of map information obtained from the map storage section on the basis of the current position and the information of current position positioned by said GPS reception section in the case that the acceleration level calculated based on the output of said sensor section or GPS reception section has been determined to have exceeded a predetermined threshold value.

7. The navigation device according to claim 3, **characterized in that** said acceleration level determination section determines a rapid acceleration/deceleration operation to be inappropriate when the current position is on a road having a predetermined curvature or greater on the basis of map information obtained from the map storage section on the basis of the current position and the information of the current position positioned by said GPS reception section in the case that the acceleration level calculated based on the output of said sensor section or GPS reception section has been determined to have exceeded a predetermined threshold value.

8. The navigation device according to claim 2, **characterized in that** intervals of the movement speed in said threshold value table are divided based on road attributes that include speed limit information, and a threshold value is set for each road attribute.

9. The navigation device according to claim 2, **characterized in that** intervals of the movement speed in said threshold value table are divided in accordance with the movement speed acquired from the vehicle, and a threshold value is set for each interval of movement speed.

10. The navigation device according to claim 5, **characterized in that** said navigation device has a notification output control section, and said notification output control section suppresses notification output of rapid acceleration/deceleration information to said output means when the vehicle is detected to be moving under a predetermined condition on the basis of information of the current position positioned by said GPS reception section and map information obtained from the map storage section on the basis of the current position.

11. The navigation device according to claim 10, **characterized in that** said predetermined condition is a state in which the vehicle is traveling through an intersection.

12. The navigation device according to claim 10, **characterized in that** said predetermined condition is a state in which the vehicle is traveling around a curve.

13. The navigation device according to any of claims 10 to 12, **characterized in that** said notification output control section notifies and outputs said rapid acceleration/deceleration information to said output means after movement under the predetermined condition has ended.
